Europäisches Patentamt

European Patent Office

Office européen des brevets

(11) Publication number: **0 445 869 A1**

## EUROPEAN PATENT APPLICATION

(21) Application number: **91200429.8**

(22) Date of filing: **28.02.91**

(51) Int. Cl.⁵: **B60K 41/14**

(30) Priority: **09.03.90 BE 9000269**

(43) Date of publication of application:
**11.09.91 Bulletin 91/37**

(84) Designated Contracting States:
**AT BE CH DE ES FR GB IT LI LU NL SE**

(71) Applicant: **VOLVO CAR SINT-TRUIDEN,
naamloze vennootschap
Rellestraat 2
B-3800 Sint-Truiden(BE)**

(72) Inventor: **Adriaenssens, Frank Cornelis Maria
Ormendaal 35
B-3060 Korbeek-Dijle (Bertem)(BE)**

(74) Representative: **Donné, Eddy
Bureau M.F.J. Bockstael nv Arenbergstraat
13
B-2000 Antwerpen(BE)**

(54) Device for the control of a continuous variable transmission for cars.

(57) Device for the control of a continuous variable transmission for cars, whereby the throttle pedal (1), the throttle valve (3) and the regulating means (5) of the continuous variable transmission (5) are coupled to each other by means of a connection (6), characterised in that the aforementioned regulating means (5) have at least two regulation zones, on the one hand, a first regulation zone (A) which is passed with the depression of the throttle pedal (1), and on the other hand, a second regulation zone (B) which provides a security; whereby the device also shows means which bring the aforementioned regulating means (5) into the second regulation zone (B) in the case of an interruption in the aforementioned connection (6).

*Fig. 1*

EP 0 445 869 A1

This invention relates to a device for the control of a continuous variable transmission (CVT) for cars.

As known such a continuous variable transmission makes use of a V-belt installed between two V-shaped belt pulleys. Each belt pulley is hereby made of two conical pulley halves movable in relation to each other and the transmission ratio is controlled by sliding the pulley halves of at least one of the aforementioned belt pulleys more or less apart in axial direction through which the radius, on which the belt is situated on the belt pulley, changes. The mutual position of the belt pulley halves is controlled in function of various data by means of generally hydraulic regulating means which provide for the movement of one of the pulley halves.

With the known devices the regulating means are by means of a cable, a rod system or the combination of both, connected to the throttle valve of the engine, which in its turn is again connected to the throttle pedal by means of a cable and/or a rod system. The connection between the regulating means and the throttle valve is in the first place meant for the adjustment of the desired number of revolutions to the regulating means in function of the position of the throttle valve, such that the regulating means can provide for the setting at this number of revolutions. The regulating range of the regulating means, respectively of the transmission, hereby corresponds to the regulating range of the throttle pedal. One extreme position of the regulating means of the continuous variable transmission corresponds to a completely released throttle pedal, while the other extreme position corresponds to a completely depressed throttle pedal.

If with the aforementioned embodiment, whereby the throttle pedal, the throttle valve and the regulating means are connected successively, an interruption occurs in the connection between the throttle valve and the regulating means, a low torque signal is transmitted to the regulating means, while the control of the throttle valve allows the generation of a high engine torque, which results in the slipping of the driving belt, through which considerable damage can be caused to the transmission, among others by heat generation, wear on the belt pulleys and damage to the driving belt.

The purpose of the present invention is a device for the control of a continuous variable transmission which offers a solution to the aforementioned disadvantages.

For this purpose this invention concerns a device for the control of a continuous variable transmission, in particular for cars, whereby the throttle pedal, the throttle valve and the regulating means of the continuous variable transmission are mutually coupled to each other by means of a connection, characterised in that the aforementioned regulating means have at least two regulation zones, on the one hand, a first regulation zone which is passed with the depression of the throttle pedal, and on the other hand, a second regulation zone which provides a security; whereby the device shows means which bring the regulating means into the second regulation zone in the case of an interruption in the aforementioned connection.

The aforementioned security is preferably formed because of the fact that the regulating means of the continuous variable transmission in the second regulation zone are adjusted as though the engine constantly generates the highest torque. It is clear that because of this, with the breaking of the aforementioned connection, damage cannot possibly be caused to the transmission, irrespective of the magnitude of the engine torque generated.

According to a variant the aforementioned security consists of a signalling device which delivers a signal as soon as the regulating means take up a position in the second regulation zone. Of course a combination of the two aforementioned possibilities can also be made.

In order to show better the characteristics according to the present invention, a preferred embodiment is described hereafter, as example and without any restrictive character, with reference to the enclosed drawings, in which:

figure 1 shows schematically a device according to the invention;

figure 2 shows on a larger scale the part that is indicated by arrow F2 in figure 1;

figure 3 shows the part from figure 2 for a variant.

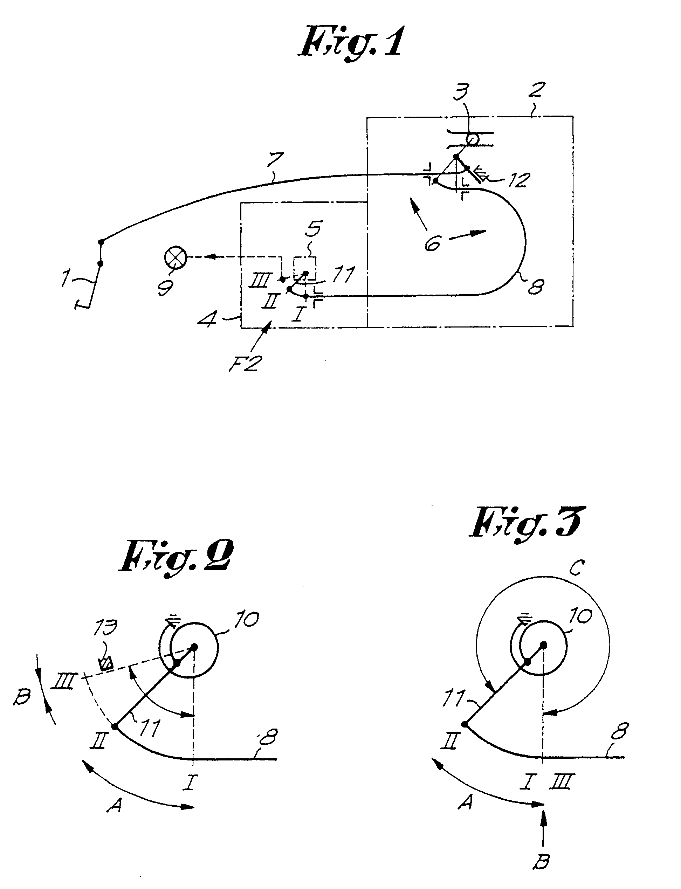

In figure 1 the throttle pedal 1, the engine 2, the throttle valve 3, the continuous variable transmission 4 and the regulating means 5 for this transmission are shown schematically. Continuous variable transmissions are in themselves sufficiently known and the construction of these is therefore not further explained in this description.

It is known that the control of the regulating means 5 occurs in function of the movement of the throttle valve 3, while this throttle valve 3 in its turn is controlled by means of the throttle pedal 1. For this purpose use is made of a connection 6, formed of one or several cables and/or rods, consisting of a first part 7 between the throttle pedal 1 and the throttle valve 3, and a second part 8 between the throttle valve 3 and the regulating means 5.

It is clear that when a fault occurs in the connection 6, in particular by an interruption of the part 8, the regulating means 5 no longer receive correct information, through which the disadvantages mentioned in the introduction can arise.

According to the invention a solution to this is offered by equipping the regulating means 5 with an extensive regulating range. These regulating means 5 have according to the invention therefore two regulation zones, respectively a first regulation zone A which is passed with the depression of the throttle pedal, and a second regulation zone B which provides a security.

The device still further shows means which bring the regulating means into the second regulation zone in the case an interruption occurs in the connection 6, in particular in the part 8 of this.

As shown in figures 1 and 2 the regulating means 5 can hereby successively pass through 3 positions I, II and III. The positions I and II define the first regulating zone A, or in other words the normal field of action. Position I corresponds to the completely depressed throttle pedal 1 and position II corresponds to the completely released throttle pedal 1.

The aforementioned position III is situated in the second regulation zone B. In this position the regulating means 5 are so adjusted as though the engine 2 constantly generates the highest torque. In this position a signalling device 9 can also be switched on through which the driver is informed.

The aforementioned means which bring the regulating means 5 into the second regulation zone B preferably consist of a spring, for example a torsion spring 10, at the location of the regulating means 5, which force the regulating element 11, to which the connection 6 is attached, in a well defined direction. This torsion spring 10 each time brings the regulating element 11 back to the aforementioned position II after the depression of the throttle pedal 1, whereby the further movement into position III is normally prevented by a stop 12 which for example works directly together with the throttle valve 3.

Position III forms an end position, which can possibly be determined by means of a stop 13.

The operation of the device according to the invention can clearly be deduced from the figures and is as follows.

With normal operation the regulating means 5, and more especially the regulating element 11, can only take up a position in the first regulation zone A. The adjustment of the continuous variable transmission 4 occurs hereby in function of the position of the throttle pedal 1, and as known also still in function of other parameters.

When the connection 6, and more especially the part 8 of this breaks, the transmission 4 does not know how great the torque is that is generated by the engine. The regulating means 5 however take up position III, whereby they as already mentioned are so adjusted as though the engine 2 constantly generates the highest torque. So the torque that is transmitted by the regulating means 5 to the rest of the transmission 4 is always greater or equal to the torque of the engine 2. The transmission 4 can consequently suffer no damage.

It is noted that when the throttle valve 3 blocks, the engine 2 will generate a specific torque continuously. The part 8 of the connection 6 ensures that a corresponding torque signal is transmitted to the regulating means 5, so that the transmission 4 can suffer no damage.

It is clear that the aforementioned security according to a variant can also only consist of the signalling device 9, whereby in case the signalling device 9 commences operation the vehicle must be stopped.

According to a variant position III can therefore coincide with position I, more especially as shown in figure 3. The first regulation zone A then overlaps the second regulation zone B. The means which bring the regulating means 5, respectively the regulating element 11 in this case into position III due to a break in the connection 6 must of course have a suitable form. They can either consist of a mechanical or electric switching mechanism, or of a spring or similar which in the embodiment according to figure 3 turns the regulating element 11 through an angle C into position III, which is then the same as position I.

Although a mechanical connection 6 is shown in the drawings, it is clear that the invention can also be applied if this connection 6 is effected by means of electrically coupled control elements.

The present invention is in no way restricted to the embodiment described as example and shown in the drawings, but such device for the control of a continuous variable transmission for cars can be developed according to different variants without departing from the scope of the present invention.

## Claims

1.  Device for the control of a continuous variable transmission for cars, whereby the throttle pedal (1), the throttle valve (3) and the regulating means (5) of the continuous variable transmission (5) are coupled to each other by means of a connection (6), characterised in that the aforementioned regulating means (5) have at least two regulation zones, on the one hand, a first regulation zone (A) which is passed with the depression of the throttle pedal (1), and on the other hand, a second regulation zone (B) which provides a security; whereby the device also shows means which bring the aforementioned regulating means (5) into the second regulation zone (B) in the case of an interruption in the aforementioned connection (6).

2. Device according to claim 1, characterised in that the regulating means (5) are adjusted in the second regulation zone (B) as though the engine (2) constantly generates the highest torque.

3. Device according to claim 2, characterised in that it has a signalling device (9) which commences operation when the regulating means (5) take up a position (III) in the second regulation zone (B).

4. Device according to claim 1, characterised in that the security consists of a signalling device (9) which delivers a signal as soon as the regulating means (5) take up a position (III) in the second regulation zone (B).

5. Device according to one of the preceding claims, characterised in that the means which bring the regulating means (5) into the second regulation zone (B) in the case of a break in the aforementioned connection (6) principally consist of a spring (10).

6. Device according to claim 5, characterised in that the connection (6) is attached to a rotatable regulating element (11) at the location of the regulating means (5) and that the spring (10) consists of a torsion spring which acts on the regulating element (11).

7. Device according to one of the claims 5 or 6, characterised in that the regulating means (5) can successively pass through 3 positions (I, II, III), whereby the first position (I) and the second position (II) correspond to the position of the throttle pedal (1), respectively in completely depressed and released position and determine the regulating range of the first regulation zone (A), and whereby the third position (III) is situated in the second regulation zone (B); that the spring (10) forces the regulating means (5) toward the third position (III); and that the connection (6) works together with a stop (12) which holds the regulating means (5) in resting position in their second position (II).

8. Device according to claim 7, characterised in that the stop (12) is situated at the location of the throttle valve (3).

9. Device according to one of the preceding claims, characterised in that the two regulation zones (A, B) overlap each other, whereby the regulating element (11) that operates the regulating means (5) with a break in the connection (6) takes up the same position as with the complete depression of the throttle pedal (1).

# Fig.1

# Fig.2

# Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 303 988   (TELEFLEX INC.)<br>* the whole document *<br>— — — | 1,5,6 | B 60 K 41/14 |
| A | DE-A-2 752 322   (SIRA)<br>* claims 3, 4 *<br>— — — | 1,7 | |
| A | NL-A-4 846 4   (AUTO UNION)<br>* the whole document *<br>— — — | 1,2 | |
| A | FR-A-2 444 586   (PORSCHE)<br>* the whole document *<br>— — — — — | 1 | |

| | TECHNICAL FIELDS SEARCHED (Int. Cl.5) |
|---|---|
| | B 60 K<br>F 16 H |

The present search report has been drawn up for all claims

| Place of search | Date of completion of search | Examiner |
|---|---|---|
| The Hague | 17 June 91 | TOPP-BORN S. |

CATEGORY OF CITED DOCUMENTS
X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document